# EUROPÄISCHE PATENTSCHRIFT

(11) **EP 1 588 511 B1**
(45) Veröffentlichungstag und Bekanntmachung des Hinweises auf die Patenterteilung: **21.05.2008**
(21) Anmeldenummer: 04703869.0
(22) Anmeldetag: 21.01.2004
(51) Int. Cl.: H04J 14/02

(54) **AUSGANGSSTUFE FUR DIE WDM-NACHRICHTENUBERTRAGUNG UND VERFAHREN ZUM AUSTAUSCHEN VON FULLICHTQUELLEN IN EINER SOLCHEN AUSGANGSSTUFE**
OUTPUT STAGE FOR CARRYING OUT WDM MESSAGE TRANSMISSION AND METHODS FOR EXCHANGING FULL LIGHT SOURCES IN AN OUTPUT STAGE OF THIS TYPE
ETAGE DE SORTIE POUR TRANSMISSION DE MESSAGES PAR MULTIPLEXAGE EN LONGUEUR D'ONDES ET PROCEDE POUR ECHANGER DES SOURCES DE LUMIERE PLEINE DANS UN TEL ETAGE DE SORTIE

(30) Priorität: 28.01.2003 DE 10303314
(43) Veröffentlichungstag der Anmeldung: 26.10.2005
(73) Patentinhaber: Ericsson AB, Stockholm (SE)
(72) Erfinder: FURST, Cornelius, 71549 Auenwald (DE)
(74) Vertreter: Stasiewski, Piotr Grzegorz
(86) Internationale Anmeldenummer: PCT/IB2004/000599
(87) Internationale Veröffentlichungsnummer: WO 2004/068765

(56) Entgegenhaltungen:
- EP-A- 0 742 650
- EP-A- 1 022 869
- US-B1- 6 324 318
- US-B1- 6 426 817

## Beschreibung

Die vorliegende Erfindung betrifft einen Knoten eines optischen Übertragungsnetzwerks für die Übertragung von optischen Nachrichtensignalen im Wellenlängenmultiplex (WDM), genauer gesagt eine Ausgangsstufe für einen solchen Knoten, die eine Fülllichtquelle verwendet, um die Sendeleistung des Knotens konstant zu halten, sowie ein Verfahren zum Austauschen von Fülllichtquellen in einer solchen Ausgangsstufe.

Auf einer optischen Faser übertragene Nachrichtensignale unterliegen einer Dämpfung, die es bei langen Übertragungsentfernungen erforderlich macht, die Signale in regelmäßigen Abständen nachzuverstärken, um zu gewährleisten, dass sie einen Empfänger mit einer ausreichenden Leistung erreichen. In einem solchen Verstärker werden alle auf der Faser übertragenen Trägerfrequenzen gleichzeitig verstärkt. Hierfür ist es erforderlich, dass der Gain des Verstärkers für alle verwendeten Trägerfrequenzen möglichst exakt derselbe ist, so dass auch, nachdem das Signal mehrere Verstärker passiert hat, das Verhältnis der Leistungen der verschiedenen Trägerwellen zueinander sich nicht wesentlich verschiebt. So lange die Leistungen der Trägerwellen sich mit der Zeit nicht ändern, ist dieses Problem durch geeignete Wahl des Frequenzbandes der Trägerwellen und des Typs des Verstärkers lösbar. Probleme ergeben sich jedoch, wenn die Leistung der einzelnen Trägerwellen abrupt variiert. Wenn auf einer einzelnen Faser eines verzweigten optischen Nachrichtennetzes eine oder mehrere Trägerfrequenzen plötzlich wegfallen, zum Beispiel aufgrund einer automatischen Schutzfunktion oder aufgrund einer technischen Störung an einer anderen Stelle des Netzwerkes, so führt dies zu einer Erhöhung der Verstärkung für die übriggebliebenen Trägerwellen. Diese Erhöhung potenziert sich, wenn die optische Faser mehrere nacheinander durchlaufene Verstärker enthält. Extrem schnelle, starke Intensitätssprünge der Trägerwellen können die Folge sein, die zu Störungen bei der Auswertung der von den betroffenen Trägerwellen beförderten Nachrichtensignale am Empfänger führen können. Im schlimmsten Fall können diese Störungen dazu führen, dass eine automatische Schutzfunktion greift und die betreffenden Trägerwellen abschaltet. Auf diese Weise pflanzt sich die Störung in ursprünglich nicht von ihr betroffene Bereiche des Netzwerkes fort, und ein katastrophaler Zusammenbruch kann die Folge sein.

Um diesem Problem zu begegnen, ist zum Beispiel in US 5 907 420 und US 6 275 313 vorgeschlagen worden, auf einer optischen Faser zusammen mit einer Mehrzahl von Nachrichten-Trägerkanälen mit unterschiedlichen Trägerfrequenzen eine Mehrzahl von Füllkanälen zu übertragen, die im Allgemeinen nicht zur Nachrichtenübertragung genutzt werden, sondern im Wesentlichen dazu dienen, Schwankungen der auf des Faser übertragenen optischen Gesamtleistung zu puffern, die sich aus dem Ein- und Ausschalten einzelner Nachrichten-Trägerkanäle ergeben. Das heißt, wenn ein Nachrichten-Trägerkanal ausfällt, so wird dies erkannt, und die optische Leistung der Füllkanäle wird so nachgeregelt, dass die optische Gesamtleistung von Nachrichten-Trägerkanälen und Füllkanälen konstant bleibt. Abrupte Änderungen der Verstärkung der Nachrichten-Trägerkanäle werden so vermieden.

Wir berücksichtigen auch US 6 426 817, das ein Ausgangsstufe entsprechend der Präambel von Anspruch 1 offenbart.

Probleme ergeben sich jedoch, wenn Arbeiten an dem Netzwerk vorgenommen werden müssen, die die zeitweilige Abschaltung oder den Austausch einer Fülllichtquelle erfordern. Die Nachrichten-Trägerkanäle sind nicht in der Lage, den Verlust an Leistung zu kompensieren, der sich durch das Abschalten der Fülllichtquelle ergeben kann. Wenn an einem einzelnen Knoten des Netzwerkes keine Fülllichtquelle zur Verfügung steht und die Leistungsregelung von dessen Ausgangsstufe somit deaktiviert ist, so bedeutet dies, dass sich aus dem Aus- oder Einschalten von Nachrichten-Trägerkanälen resultierende Intensitätsschwankungen auf von diesem Knoten ausgehenden Fasern so weit verstärken können, dass sie die Funktionsfähigkeit des gesamten Netzes in Frage stellen können. Es ist daher von großer Bedeutung, über Ausgangsstufen für ein solches Fernmeldenetz zu verfügen, die die zeitweilige Abschaltung von Fülllichtquellen ermöglichen, ohne dass dies auch nur zu kurzzeitigen Aussetzern der Gesamtleistungsregelung führt.

Aufgabe der Erfindung ist, eine Ausgangsstufe für die WDM-Nachrichtenübertragung sowie ein Verfahren zum Austauschen von Fülllichtquellen in einer solchen Ausgangsstufe anzugeben, die diese Anforderungen befriedigen.

Die Aufgabe wird zum einen dadurch gelöst, dass bei einer Ausgangsstufe mit einer Mehrzahl von Nachrichtenkanal-Lichtquellen zum Liefern jeweils einer mit einem Nachrichtensignal modulierten Trägerwelle an einen Ausgang der Knotens, einer Fülllichtquelle zum Liefern einer Fülllichtwelle an denselben Ausgang mit einer Leistung entsprechend einem einem Steuereingang der Fülllichtquelle zugeführten Sollleistungssignal, wenigstens einem Photodetektor zum Erfassen der Gesamtleistung aller Fülllicht- und Trägerwellen am Ausgang der Ausgangsstufe und einer ersten Steuerschaltung zum Erzeugen eines ersten Sollleistungssignals dahingehend, dass die von dem Photodetektor erfasste Gesamtleistung konstant auf einem vorgegebenen Referenzwert gehalten wird, die Fülllichtquelle Teil einer an einem ersten Montageplatz austauschbar in der Ausgangsstufe montierten Baugruppe ist, dass die Ausgangsstufe einen zweiten Montageplatz aufweist, an dem eine zweite mit der ersten Baugruppe funktionsgleiche Baugruppe montierbar ist, und dass die Ausgangsstufe eine Hilfsschaltung zum Versorgen einer der zwei Fülllichtquellen mit einem kontinuierlich abnehmenden zweiten Sollleistungssignal umfasst. Wenn zum Zweck des Austausches der ersten Fülllichtquelle eine zweite Baugruppe mit einer zweiten Fülllichtquelle am zweiten Montageplatz montiert ist, so ermöglicht es die Hilfsschaltung, die Leistung der ersten Fülllichtquelle allmählich zu reduzieren, während gleichzeitig die Leistung der zweiten Fülllichtquelle laufend nachgeregelt wird, so dass keine abrupten Sprünge in der Gesamtleistung der Ausgangsstufe auftreten. Wenn die Leistung der ersten Fülllichtquelle auf diese Weise auf Null gebracht ist, kann sie ausgebaut werden oder können Arbeiten an ihr vorgenommen werden, ohne dass dies einen Einfluss auf die Übertragungsqualität der Nachrichtensignale hat.

Einer ersten bevorzugten Ausgestaltung der Erfindung zufolge ist vorgesehen, dass die Hilfsschaltung das Sollleistungssignal von der ersten Steuerschaltung empfängt und in das kontinuierlich abnehmende zweite und ein drittes Sollleistungssignal aufteilt, wobei das zweite und das dritte Sollleistungssignal jeweils für Sollleistungen der zwei Fülllichtquellen repräsentativ sind, deren Summe der vom ersten Sollleistungssignal repräsentierten Leistung entspricht. Mit anderen Worten gibt bei dieser Ausgestaltung das von der ersten Steuerschaltung gelieferte Sollleistungssignal diejenige Leistung an, die die zwei Fülllichtquellen gemeinsam haben müssen, um die Gesamtleistung konstant zu halten, und die Hilfsschaltung weist jeder Fülllichtquelle die von ihr zu erbringende Lichtleistung zu.

Einer zweiten bevorzugten Ausgestaltung der Erfindung zufolge ist die Hilfsschaltung eine zweite Steuerschaltung, jeder Steuerschaltung ist eine der Fülllichtquellen zugeordnet, die das von der Steuerschaltung erzeugte Sollwertsignal empfängt, und die Steuerschaltungen weisen jeweils Mittel zum kontinuierlichen Reduzieren des ihnen individuell vorgegebenen Referenzwertes auf, auf dem sie die Gesamtleistung zu halten versuchen. Wenn bei einer solchen Ausgangsstufe eine der zwei Fülllichtquellen außer Betrieb genommen werden soll, so genügt es, den vorgegebenen Referenzwert der dieser Fülllichtquelle zugeordneten Steuerschaltung zu reduzieren. Die Folge ist, dass die Steuerschaltung, deren Referenzwert reduziert ist, feststellt, dass die Gesamtleistung zu hoch ist, und dementsprechend beginnt, die Leistung der zugeordneten Fülllichtquelle herunterzuregeln. Die daraus resultierende Leistungsabnahme wird von der anderen Steuerschaltung erfasst, und diese versucht, der Leistungsabnahme entgegenzuwirken, indem sie die Leistung der ihr zugeordneten Fülllichtquelle heraufsetzt. Dieser Prozess setzt sich so lange fort, bis die Leistung der Fülllichtquelle mit dem reduzierten Refenrenzwert Null ist, so dass sie ausgebaut werden kann oder Arbeiten an ihr vorgenommen werden kann, ohne dass dies die der Ausgangsstufe beeinflusst.

Um Instabilitäten bei der konkurrierenden Leistungsregelung durch die zwei Steuerschaltungen zu vermeiden, ist es zweckmäßig, wenn die Steuerschaltungen zwischen zwei verschiedenen Reaktionsgeschwindigkeiten für die Steuerung der Leistung ihrer Fülllichtquelle umschaltbar sind. Zweckmäßigerweise wird man die Reaktionsgeschwindigkeit für die Fülllichtquelle, deren Leistung auf Null reduziert werden soll, auf den niedrigeren und die der hochzuregelnden Fülllichtquelle auf den höheren Wert einstellen, um während des Vorganges des Herunterfahrens der Leistung der einen Fülllichtquelle die Gesamtleistung von Nachrichtenkanälen und Fülllichtkanälen der Ausgangsstufe möglichst genau auf dem Wert zu halten, der auch beim Normalbetrieb der Ausgangsstufe eingehalten werden soll.

Es kann auch vorgesehen werden, dass die Geschwindigkeit, mit der die Steuerschaltung der herunterzufahrenden Fülllichtquelle auf eine Veränderung der vom Photodetektor erfassten Gesamtleistung reagiert, auf Null gesetzt wird, das heißt, die Steuerschaltung reagiert nicht mehr auf eine Veränderung der Gesamtleistung. In diesem Fall ist es erforderlich, dass die Mittel zum Reduzieren des Referenzwertes in der Lage sind, den Referenzwert kontinuierlich auf Null zu reduzieren, um die Leistung der herunterzufahrenden Fülllichtquelle auf Null zu bringen.

Wenn, wie oben angegeben, jeder Fülllichtquelle eine Steuerschaltung zugeordnet ist, so ist sie vorzugsweise mit der Fülllichtquelle in einer austauschbaren Baugruppe zusammengefasst, so dass im Falle einer Störung beide bequem gemeinsam ausgetauscht werden können.

Die austauschbaren Baugruppen sind vorzugsweise jeweils in Form von Steckkarten realisiert.

Der Ausgang der erfindungsgemäßen Ausgangsstufe ist vorzugsweise durch einen ersten von zwei Ausgängen eines Leistungsteilers gebildet, von denen ein zweiter mit dem Photodetektor verbunden ist. Der auf den zweiten Ausgang ausgekoppelte Leistungsanteil sollte nur wenige Prozent der Gesamtleistung ausmachen.

Zum Zusammenführen der Nachrichten-Trägerwellen und der Fülllichtwellen auf dem Ausgang der Ausgangsstufe ist ein optischer Multiplexer mit wellenlängenselektiven Eingängen vorgesehen. Von diesen Eingängen kann ein erster mit einem Ausgang der ersten Fülllichtquelle und ein zweiter mit einem Ausgang der zweiten Fülllichtquelle verbunden sein; in diesem Fall sind der erste und der zweite Eingang vorzugsweise jeweils für benachbarte Frequenzen des Wellenlängenmultiplex selektiv, so dass eine Verlagerung der Fülllichtleistung von einer Fülllichtquelle auf die andere die Gestalt des Spektrums des Wellenlängenmultiplex und damit eventuelle Raman-Verkippung auf einer an den Ausgang angeschlossenen optischen Faser möglichst wenig beeinflusst.

Eine andere Möglichkeit ist, die zwei bei identischen Wellenlängen arbeitenden Fülllichtquellen über einen Strahlkombinierer einem gemeinsamen Eingang des optischen Multiplexers zuzuführen. Vorzugsweise wird als Strahlkombinierer ein 3dB-Koppler eingesetzt, das heißt ein Koppler, der an seinen beiden Eingängen jeweils den gleichen Verlust aufweist.

Für den normalen Betrieb des erfindungsgemäßen Senders genügt es, wenn einer seiner beiden Montageplätze mit einer eine Fülllichtquelle enthaltenden Baugruppe bestückt ist, denn wenn diese Baugruppe abgeschaltet oder ausgebaut werden soll, kann vorher bei laufendem Sender der zweite Steckplatz mit einer zweiten Baugruppe bestückt werden. Zweckmäßig ist jedoch, wenn auch im Normalbetrieb beide Montageplätze mit einer Baugruppe bestückt sind, da dies die Möglichkeit schafft, ohne vorherigen menschlichen Eingriff eine der zwei Fülllichtquellen herunterzufahren, wenn eine Störung ihrer Baugruppe erfasst oder vermutet wird.

Weitere Merkmale und Vorteile der Erfindung ergeben sich aus der nachfolgenden Beschreibung von Ausführungsbeispielen unter Bezugnahme auf die beigefügten Figuren.

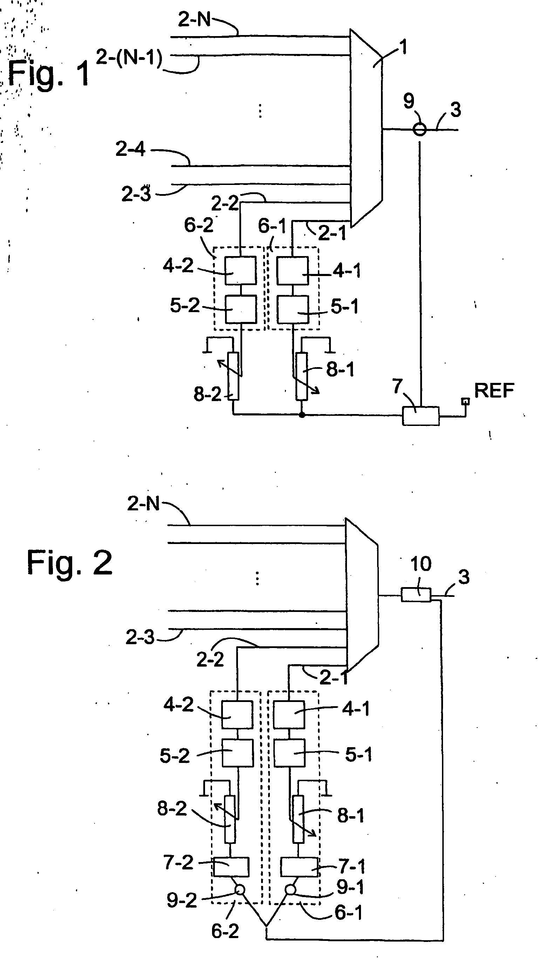

Figuren 1 bis 4 zeigen jeweils Blockdiagramme von Ausgestaltungen der erfindungsgemäßen Ausgangsstufe.

Die in Fig. 1 zeigt eine Ausgangsstufe eines Netzknotens in einem WDM-Fernmeldenetzwerk. Sie umfasst einen Wellenlängenmultiplexer 1 mit N Eingängen 2-1 bis 2-N und einem Ausgang, der an eine zu einem anderen Netzknoten führende optische Faser 3 gekoppelt ist. Die Eingänge 2-3 bis 2-N empfangen jeweils eine mit einem Nachrichtensignal modulierte Trägerwelle von einer (nicht dargestellten) Vermittlungsmatrix des Knotens. An die Eingänge 2-1 und 2-2 sind zwei Fülllaser 4-1, 4-2 angeschlossen, die zusammen mit zugeordneten Treiberschaltungen 5-1, 5-2 auf einer in der Ausgangsstufe austauschbar montierten Steckkarte 6-1, 6-2 aufgebaut sind. Die Wellenlängen der an den Eingängen des Multiplexers 1 anliegenden Trägerwelle und der Fülllaser sind sämtlich voneinander verschieden und in einem vorgegebenen Frequenzband gleichmäßig gestaffelt. Die Wellenlängen der Fülllaser 4-1, 4-2 sind einander unmittelbar benachbart.

Ein Photodetektor 9 ist an den Eingangsanschluss der optischen Faser 3 gekoppelt, um die sich aus den Beiträgen der Nachrichten-Trägerwellen und der Fülllaser zusammensetzende Gesamtleistung der Ausgangsstufe zu erfassen. Der Photodetektor 9 liefert ein für die erfasste Leistung repräsentatives Messsignal an eine Steuerschaltung 7, die ferner ein Referenzsignal REF empfängt, das einen gewünschten Wert der Gesamtleistung vorgibt. Die Steuerschaltung 7 erzeugt hieraus ein Sollwertsignal, welches repräsentativ ist für eine Leistung der Fülllaser 4-1, 4-2, die benötigt wird, um die Gesamtleistung auf dem vorgegebenen Wert zu halten. Das heißt, so lange die Gesamtleistung mit dem vorgegebenen Wert des Referenzsignals übereinstimmt, hält die Steuerschaltung 7 das von ihr erzeugte Sollwertsignal konstant, wenn die erfasste Leistung unter dem vorgegebenen Wert liegt, erhöht sie das Sollwertsignal, bis wieder Übereinstimmung festgestellt wird, und wenn die erfasste Leistung über dem vorgegebenen Wert liegt, reduziert sie das Sollwertsignal dementsprechend. Die Steuerschaltung 7 kann z. B. durch einen an sich bekannten PI-Regler gebildet sein.

Mit dem Sollwertsignalausgang der Steuerschaltung 7 sind zwei parallele Potentiometer 8-1, 8-2 jeweils über einen ersten festen Anschluss verbunden. Der zweite feste Anschluss der Potentiometer liegt auf Masse, und der variable Anschluss ist mit dem Steuereingang der Treiberschaltungen 5-1 bzw. 5-2 verbunden. Die variablen Anschlüsse der Potentiometer sind aneinander gekoppelt verstellbar, so dass die aus dem Sollwertsignal abgeteilten Eingangsspannungen an den Steuereingängen der Treiberschaltungen 5-1, 5-2 bei einem Verstellen der Potentiometer jeweils gegenläufig und unter Konstanthaltung ihrer Summe variieren. Das heißt, in einer Extremstellung der Potentiometer, in der zum Beispiel der Steuereingang der Treiberschaltung 5-1 unter Umgehung des Potentiometerwiderstandes 8-1 das volle Sollwertsignal von der Steuerschaltung 7 empfängt, ist der Eingang der Treiberschaltung 5-2 auf Masse gelegt. Somit erzeugt der Fülllaser 4-1 die gesamte zum Konstanthalten der Gesamtleistung der Ausgangsstufe benötigte Fülllichtleistung, während der Fülllaser 4-2 ausgeschaltet ist. In diesem Zustand könnte die Steckkarte 6-2 auch fehlen, ohne dass dies die Funktion der Ausgangsstufe beeinflussen würde.

Wenn die Steckkarte 6-1 ausgebaut werden soll, genügt es, die Potentiometer in ihrer jeweils andere extreme Stellung zu verschieben, wodurch die Leistung des Fülllasers 4-1 allmählich auf Null geht und der Fülllaser 4-2 an seine Stelle tritt.

Die Potentiometer 8-1, 8-2 befinden sich nicht auf den Steckkarten 6-1, 6-2, sondern auf einer gemeinsamen Hauptplatine, auf der die Steckkarten montiert sind, da auf diese Weise eine mechanische Kopplung der Potentiometer leichter realisierbar ist.

Selbstverständlich können die Potentiometer durch beliebige andere Regler ersetzt werden, die es erlauben, das Sollleistungssignal in variablen Verhältnissen auf die zwei Treiberschaltungen aufzuteilen, zum Beispiel durch gepaarte Transistoren, die mit sich gegenläufig entwickelnden Spannungsrampen angesteuert werden.

Die Ausgestaltung der Figur 2 unterscheidet sich von der der Figur 1 im Wesentlichen dadurch, dass ein kleiner Anteil der Gesamtleistung der Ausgangsstufe, der durch einen Koppler 10 von der optischen Faser 3 abgegriffen wird, zu gleichen Teilen zwei Photodetektoren 9-1 bzw. 9-2 zugeführt wird, die sich auf den Steckkarten 6-1, 6-2 befinden und an die wiederum auf den Steckkarten angebrachte, jeweils spezifisch einem Fülllaser 4-1 bzw. 4-2 zugeordnete Steuerschaltungen 7-1 bzw. 7-2 angeschlossen sind. Der Vorteil dieser Ausgestaltung liegt insbesondere darin, dass sich durch die Anbringung der Steuerschaltungen auf einer gemeinsamen Steckkarte zusammen mit den Fülllasern die Signalwege zwischen diesen verkürzen und eine schnellere Nachführung der Fülllaserleistung bei Schwankungen der Gesamtleistung möglich ist. Außerdem können aufgrund der Redundanz der Steuerschaltung und des Photodetektors auch an diesen Elementen auftretende Störungen durch ein Umschalten von einer Steckkarte zur anderen abgefangen werden.

Ein Problem kann bei dieser Ausgestaltung aus der Tatsache resultieren, dass während des allmählichen Überganges von einem Fülllaser zum anderen beide Steuerschaltungen 7-1, 7-2 konkurrierend versuchen, die Gesamtleistung konstant zu halten und sich dabei zu Schwingungen anregen können, so dass die Gesamtleistung instabil wird. Dieses Problem lässt sich jedoch vermeiden, wenn für eine der zwei Treiberschaltungen 7-1 oder 7-2 eine Reaktionszeit, mit der diese auf Änderungen der von ihrem Photodetektor erfassten Gesamtleistung reagiert, größer eingestellt wird als für die andere. Wenn die Reaktionszeiten der zwei Steuerschaltungen sich um einen Faktor 10 oder mehr unterscheiden, kann davon ausgegangen werden, dass kurzfristige Schwankungen der Gesamtleistung ausschließlich von der jeweils flinkeren der zwei Steuerschaltungen abgefangen werden.

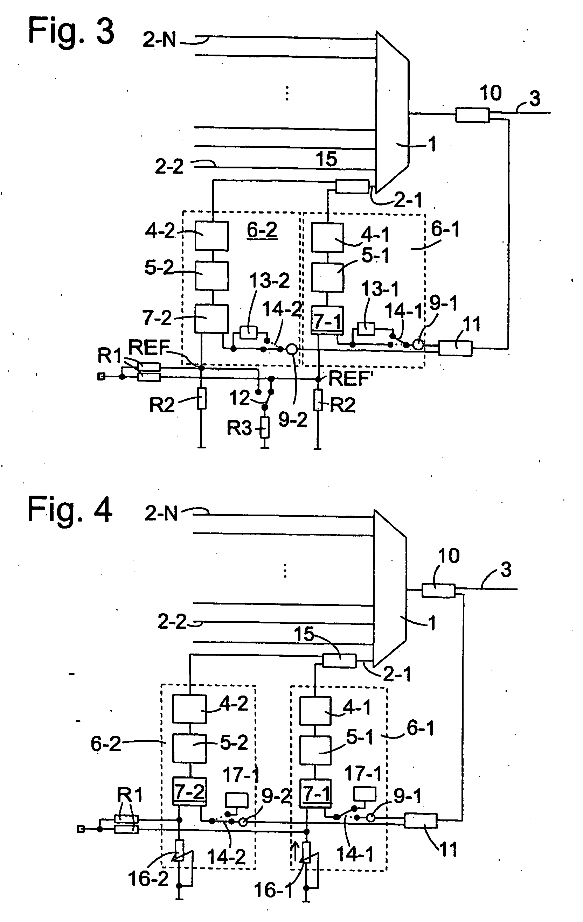

Bei der Ausgestaltung der Figur 3 sind wie bei der der Figur 2 auf jeder Steckkarte 6-1, 6-2 ein Fülllaser 4-1 bzw. 4-2, eine Treiberschaltung 5-1, 5-2 für diesen, eine Steuerschaltung 7-1, 7-2 zum Liefern eines Leistungssollwertsignals an die jeweilige Treiberschaltung sowie ein Photodetektor 9-1, 9-2 angebracht, die über zwei Koppler 10, 11 jeweils einen gleichen kleinen Anteil der Gesamtleistung empfangen. An der Steuerschaltung 7-2 liegt ferner ein Referenzsignal REF an, welches den von der Steuerschaltung 7-2 einzuregelnden Wert der Gesamtleistung vorgibt. Das Referenzsignal REF ist hier mit Hilfe eines Spannungstreibers, bestehend aus Widerständen R1, R2, aus einer Versorgungsspannung erhalten. Ein identischer Spannungsteiler ist auch der Steuerschaltung 7-1 zugeordnet. Die Mittenpunkte beider Spannungsteiler R1, R2 sind wahlweise über einen Schalter 12 und einen weiteren Widerstand R3 mit Masse verbindbar. In der in der Figur dargestellten Stellung des Schalters 12 ist der Widerstand R3 zum Widerstand R2 des der Steuerschaltung 7-1 zugeordneten Spannungsteilers parallelgeschaltet, mit der Folge, dass am Referenzsignaleingang der Steuerschaltung 7-1 ein Spannungspegel REF' anliegt, der niedriger ist als REF. Wenn die Steuerschaltung 7-1 eine höhere als die ihr durch REF' vorgegebene Gesamtleistung erkennt, reduziert sie dementsprechend die Leistung des Fülllasers 4-1. Infolgedessen erkennt die Steuerschaltung 7-2 eine zu niedrige Gesamtleistung und regelt dementeine zu niedrige Gesamtleistung und regelt dement- so sprechend den Fülllaser 4-2 hoch. Dies geschieht so lange, bis die Leistung des Lasers 4-1 Null ist. In diesem Zustand kann die Steckkarte 6-1 ausgebaut werden, um sie auszutauschen, Wartungsmaßnahmen an ihr vorzunehmen oder dergleichen. Wenn sie anschließend wieder eingebaut wird, bleibt sie so lange außer Betrieb, bis der Schalter 12 umgelegt wird, was dazu führt, dass die Steuerschaltung 7-1 den Referenzwert REF empfängt und die Leistung des Fülllasers 41 hochregelt, während die Steuerschaltung 7-2 REF' empfängt und die Leistung des Fülllasers 4-2 allmählich auf Null zurücknimmt.

Auch hier ist es zweckmäßig, unterschiedliche Reaktionszeiten vorzusehen, mit denen die Steuerschaltungen 7-1, 7-2 auf Änderungen der von ihrem zugeordneten Photodetektor 9-1 bzw. 9-2 erfassten Gesamtleistung reagieren. Derartige unterschiedliche Reaktionszeiten sind zum Beispiel realisierbar mit Hilfe von RC-Gliedern oder ähnlichen Verzögerungselementen 13-1, 13-2, die jeweils mit Hilfe eines Schalters 14-1 bzw. 14-2 in die Signalleitung zwischen Photodetektor 9-1, 9-2 und Steuerschaltung 7-1, 7-2 einfügbar sind. Die Schalter 14-1, 14-2 sind an den Schalter 12 gekoppelt, so dass diejenige Steuerschaltung 7-1 oder 7-2, die das verminderte Referenzsignal REF' empfängt, in Figur 3 also die Steuerschaltung 7-1, auch ein verzögertes Photodetektorsignal empfängt. Die Steuerschaltung 7-1 kann daher nur langsam auf eine vermeintlich zu hohe Gesamtleistung reagieren, indem sie ihren Fülllaser 4-1 herunterregelt, wohingegen eine dadurch verursachte Abweichung der Gesamtleistung von dem tatsächlich durch den Pegel REF vorgegebenen Wert von der Steuerschaltung 7-2 in wesentlich kürzerer Zeit korrigiert wird. Die Gesamtleistung weicht daher niemals nennenswert von dem durch REF vorgegebenen Wert ab.

Ein weiterer Unterschied zwischen der Ausgestaltung der Figur 3 und den zuvor behandelten ist, dass die Fülllaser 4-1, 4-2 mit identischen Wellenlängen emittieren und ihr Licht über einen 3dB-Koppler 15 in einen einzigen Eingang 2-1 des Multiplexers 1 einspeisen. Die Verwendung des 3dB-Kopplers 15 führt dazu, dass von der Ausgangsleistung der Fülllaser jeweils nur die Hälfte den Multiplexer 1 erreicht, was die Verwendung leistungsfähigerer Fülllaser als bei den Ausgestaltungen der Figuren 1 und 2 erforderlich machen kann. Dem steht jedoch der Vorteil gegenüber, dass eine zusätzliche Wellenlänge auf der optischen Faser 3 für die Übertragung von Nachrichtensignalen zur Verfügung steht. Es liegt auf der Hand, dass auch bei den Ausgestaltungen der Figuren 1 und 2 Fülllaser gleicher Wellenlänge über einen Koppler einem gemeinsamen Eingang des Multiplexers 1 zugeführt werden können.

Figur 4 zeigt eine weitere Ausgestaltung der erfindungsgemäßen Ausgangsstufe. Bei dieser Ausgestaltung sind die Referenzsignaleingänge der Steuerschaltungen 7-1, 7-2 jeweils an die Mittelpunkte von Spannungsteilern angeschlossen, die jeweils durch einen mit dem Versorgungspotential verbundenen Festwertwiderstand R1 und einen mit Masse verbundenen Regler wie etwa ein Potentiometer 16-1, 16-2 oder einen Transistor gebildet sind.

Zwischen den Photodetektoren 9-1, 9-2 und den ihnen zugeordneten Eingängen der Steuerschaltung 7-1, 7-2 sind Schalter 14-1, 14-2 angeordnet, die es erlauben, die Steuerschaltung wahlweise mit dem Photodetektor 9-1, 9-2 oder mit einem Abtasthalteglied 17-1, 17-2 zu verbinden. Durch Verbinden mit dem Abtasthalteglied, das einen früheren Ausgangssignalpegel des zugeordneten Photodetektors speichert, wird die betroffene Steuerschaltung daran gehindert, auf Änderungen der von ihrem Photodetektor gemessenen Gesamtleistung zu reagieren; ihre Reaktionsgeschwindigkeit wird gleichsam auf Null gesetzt.

Um bei der Ausgangsstufe der Figur 4 den Fülllaser 4-1 außer Betrieb zu nehmen, wird zunächst ein aktueller Ausgangssignalpegel des Photodetektors 9-1 in das Abtasthalteglied 17-1 übernommen, anschließend wird der Schalter 14-1 in die in der Figur gezeigte Stellung gebracht, in der er das Abtasthalteglied 17-1 mit der Steuerschaltung 7-1 verbindet. Zu dieser Zeit befindet sich das Potentiometer 16-1 in einer Stellung maximalen Widerstandes, in der das Potential REF als vorgegebener Wert am Eingang der Steuerschaltung 7-1 anliegt. Das Potentiometer 16-2 befindet sich in der gleichen Stellung, so dass die Steuerschaltung 7-2, die nach wie vor ein Meßsignal von ihrem Photodetektor 9-2 empfängt, die Gesamtleistung der Ausgangsstufe steuern kann. Nun wird der Widerstand des Potentiometers 16-1 allmählich auf Null verstellt, wie durch den neben dem Potentiometer eingezeichneten Pfeil angedeutet, mit der Folge, dass die Steuerschaltung 7-1 die Leistung des Fülllasers 4-1 allmählich auf Null zurückbringt. Im Gegenzug regelt die Steuerschaltung 7-2 die Leistung des Fülllasers 4-2 hoch, um die Gesamtleistung konstant zu halten. Sobald die Leistung des Fülllasers 4-1 auf Null zurückgefahren ist, kann die Steckkarte 6-1, auf der er sich befindet, ausgebaut werden.

## Patentansprüche

1. Ausgangsstufe für die WDM-Nachrichtenübertragung, mit einer Mehrzahl von Nachrichtenkanal-Anschlüssen (2-2, 2-3, ..., 2-N)zum Liefern jeweils einer mit einem Nachrichtensignal modulierten Trägerwelle an einen Ausgang der Ausgangsstufe, einer Fülllichtquelle (4-1; 4-2) zum Liefern einer Fülllichtwelle an denselben Ausgang mit einer Leistung entsprechend einem einem Steuereingang der Fülllichtquelle (4-1; 4-2) zugeführten Sollleistungssignal, wenigstens einem Photodetektor (9; 9-1; 9-2) zum Erfassen der Gesamtleistung aller Fülllicht- und Trägerwellen am Ausgang der Ausgangsstufe, einer ersten Steuerschaltung (7; 7-1; 7-2) zum Erzeugen eines ersten Sollleistungssignals dahingehend, dass die von dem Photodetektor (9; 9-1; 9-2) erfasste Gesamtleistung konstant auf einem vorgegebenen. Referenzwert (REF) gehalten wird, worin der Fülllichtquelle (4-1; 4-2) Teil einer an einem ersten Montageplatz austauschbar in der Ausgangsstufe montierten Baugruppe (6-1; 6-2) ist, **dadurch gekennzeichnet, dass** die Ausgangsstufe einen zweiten Montageplatz aufweist, an dem eine zweite eine Fülllichtquelle (4-2; 4-1) enthaltende Baugruppe (6-2; 6-1) montierbar ist, und dass die Ausgangsstufe eine Hilfsschaltung (8-1, 8-2; 7-2; 7-1) zum Versorgen einer der zwei Fülllichtquellen (4-1,4-2) mit einem kontinuierlich abnehmenden zweiten sollleißtungssignal umfasst.

2. Ausgangsstufe nach Anspruch 1, **dadurch gekennzeichnet, dass** die Hilfsschaltung (8-1, 8-2) das Sollleistungssignal von der ersten Steuerschaltung (7) empfängt und in das zweite und ein drittes Sollleistungssignal aufteilt, wobei das zweite und das dritte Sollleistungssignal jeweils für Sollleistungen der zwei Fülllichtquellen (4-1, 4-2) repräsentativ sind, deren Summe der vom ersten Sollleistungssignal repräsentierten Leistung entspricht.

3. Ausgangsstufe nach Anspruch 1, **dadurch gekennzeichnet, dass** die Hilfsschaltung eine zweite Steuerschaltung (7-2; 7-1) ist, dass jeder Steuerschaltung (7-1, 7-2) eine der Fülllichtquellen (4-1, 4-2) zugeordnet ist, die das von der Steuerschaltung (7-1, 7-2) erzeugte Sollwertsignal empfängt, und dass die Steuerschaltungen (7-1, 7-2) jeweils Mittel (8-1, 8-2; R1, R2, R3, 12; R1, 16-1, 16-2) zum Reduzieren des ihnen individuell vorgegebenen Referenzwertes (REF) aufweisen.

4. Ausgangsstufe nach Anspruch 3, **dadurch gekennzeichnet, dass** die Steuerschaltungen (7-1, 7-2) zwischen zwei verschiedenen Reaktionsgeschwindigkeiten für die Steuerung der Leistung der Fülllichtquelle (4-1, 4-2) umschaltbar sind.

5. Ausgangsstufe nach Anspruch 4, **dadurch gekennzeichnet, dass** die Geschwindigkeit, mit der eine der Steuerschaltungen (7-1, 7-2) auf eine Veränderung der vom Photodetektor (9-1, 9-2) erfassten Leistung reagiert, auf Null setzbar ist, und das die Mittel (R1, 16-1, 16-2) zum Reduzieren des Referenzwertes eingerichtet sind, den Referenzwert kontinuierlich auf Null zu reduzieren.

6. Ausgangsstufe nach Anspruch 3, 4 oder 5, **dadurch gekennzeichnet, dass** jede Steuerschaltung (7-1, 7-2) mit der von ihr gesteuerten Fülllichtquelle (4-1, 4-2) in einer der austauschbaren Baugruppen (6-1, 6-2) zusammengefasst ist.

7. Ausgangsstufe nach einem der vorhergehenden Ansprüche, **dadurch gekennzeichnet, dass** die Baugruppe (6-1, 6-2) eine Steckkarte ist.

8. Ausgangsstufe nach einem der Ansprüche 2 bis 6, **dadurch gekennzeichnet, dass** ihr Ausgang durch einen ersten Ausgang eines Leistungsteilers (10) mit zwei Ausgängen gebildet ist, von denen ein zweiter mit dem Photodetektor (9; 9-1, 9-2) verbunden ist.

9. Ausgangsstufe nach einem der vorhergehenden Ansprüche, **dadurch gekennzeichnet, dass** sie einen optischen Multiplexer (1) umfasst, von dessen wellenlängenselektiven Eingängen (2-1, ..., 2-N) ein erster (2-1) mit einem Ausgang der ersten Fülllichtquelle (4-1) verbunden ist und ein zweiter (2-2) mit einem Ausgang der zweiten Fülllichtquelle (4-2) verbunden ist, und dass der erste und der zweite Eingang (2-1, 2-2) jeweils selektiv für benachbarte Frequenzen des Wellenlängenmultiplex sind.

10. Ausgangsstufe nach einem der Ansprüche 1 bis 8, **dadurch gekennzeichnet, dass** sie einen optischen Multiplexer (1) umfasst, von dessen wellenlängenselektiven Eingängen (2-1, ..., 2-N) einer (2-1) über einen Strahlkombinierer (15) mit einem Ausgang der ersten Fülllichtquelle (4-1) und mit einem Ausgang der zweiten Fülllichtquelle (4-2) verbunden ist.

11. Ausgangsstufe nach Anspruch 10, **dadurch gekennzeichnet, dass** der Strahlkombinierer (15) ein 3dB-Koppler ist.

12. Ausgangsstufe nach einem der vorhergehenden Ansprüche, **dadurch gekennzeichnet, dass** beide Montageplätze mit einer Baugruppe (6-1, 6-2) bestückt sind.

13. Verfahren zum Austauschen von Fülllichtquellen in einer Ausgangsstufe für die WDM-Nachrichtenübertragung, insbesondere nach einem der vorhergehenden Ansprüche, mit den Schritten:
a) Montieren einer eine neue Fülllichtquelle (4-2) enthaltenden Baugruppe (6-2) an einem Montageplatz der Ausgangsstufe;
b) Regeln der Leistung einer auszubauenden Fülllichtquelle (4-1) und der neuen Fülllichtquelle (4-2) mit dem Ziel, die Gesamtleistung von Träger- und Fülllichtwellen der Ausgangsstufe konstantzuhalten, und gleichzeitig kontinuierliches Reduzieren der Leistung der auszubauenden Fülllichtquelle (4-1) und kontinuierliches Steigern der Leistung der neuen Fülllichtquelle (4-2), bis die Leistung der auszubauenden Fülllichtquelle (4-1) Null ist,
c) Ausbauen der auszubauenden Fülllichtquelle (4-2).

14. Verfahren nach Anspruch 13, bei dem ein Sollwert für die Leistung der Fülllichtquellen (4-1, 4-2) von einer gemessenen Gesamtleistung von Träger- und Fülllichtwellen der Ausgangsstufe abgeleitet und auf die Fülllichtquellen (4-1, 4-2) verteilt wird.

15. Verfahren nach Anspruch 13, bei dem ein Sollwert für die Gesamtleistung von Träger- und Fülllichtwellen der Ausgangsstufe vorgegeben wird, und die Leistung jeder Fülllichtquelle (4-1, 4-2) unabhängig anhand des Sollwerts der Gesamtleistung und einer gemessenen tatsächlichen Gesamtleistung geregelt wird, wobei die Leistungregelung der neuen Fülllichtquelle (4-2) darauf abzielt, die Differenz zwischen der gemessenen Gesamtleistung und dem Sollwert zu minimieren, während die Leistungsregelung der auszubauenden Fülllichtquelle (4-1) darauf abzielt, die Differenz zwischen der gemessenen Gesamtleistung und einem Bruchteil (REF') des Sollwerts zu minimieren.

16. Verfahren nach Anspruch 15, **dadurch gekennzeichnet, dass** die Leistungsregelung für die auszubauenden Fülllichtquelle (4-1) mit einer niedrigeren Reaktionsgeschwindigkeit erfolgt als für die neue Fülllichtquelle (4-2).

17. Verfahren nach Anspruch 15, **dadurch gekennzeichnet, dass** die Reaktionsgeschwindigkeit, mit der die Leistungsregelung der auszubauenden Fülllichtquelle (4-1) auf eine Änderung der Gesamtleistung reagiert, auf Null gesetzt wird.

## Claims

1. An output stage for WDM message transmission, with a plurality of message channel ports (2-2, 2-3, ..., 2-N), to provide in each case a carrier wave modulated with a message signal to an output of the output stage, a full light source (4-1; 4-2) to provide a full light wave to the same output with a power level corresponding to a required power level signal supplied to a control input of the full light source (4-1; 4-2), at least one photodetector (9; 9-1; 9-2) to register the total power level of all full light waves and carrier waves at the output of the output stage, a first control circuit (7; 7-1; 7-2) to generate a first required power level signal such that the total power level registered by the photodetector (9; 9-1; 9-2) is maintained constant at a prescribed reference value (REF), wherein the full light source (4-1; 4-2) is part of a module (6-1; 6-2) replaceably mounted on a first mounting location in the output stage, **characterised in that** the output stage has a second mounting location, on which a second module (6-2; 6-1) containing a full light source (4-2; 4-1) can be mounted, and **in that** the output stage includes an auxiliary circuit (8-1, 8-2; 7-2; 7-1) to supply one of the two full light sources (4-1, 4-2) with a continuously reducing second required power level signal.

2. The output stage according to Claim 1, **characterised in that** the auxiliary circuit (8-1, 8-2) receives the required power level signal from the first control circuit (7) and divides it into a second and a third required power level signal, wherein the second and the third required power level signal in each case are representative of power levels required from the two full light sources (4-1, 4-2), whose sum corresponds to the power level represented by the first required power level signal.

3. The output stage according to Claim 1, **characterised in that** the auxiliary circuit is a second control circuit (7-2; 7-1), **in that** each control circuit (7-1, 7-2) is assigned to one of the full light sources (4-1, 4-2), which receives the required value signal generated by the control circuit (7-1, 7-2) and **in that** each of the control circuits(7-1, 7-2) has means (8-1, 8-2; R1, R2, R3, 12; R1, 16-1, 16-2) for reducing the reference value (REF) individually prescribed to it.

4. The output stage according to Claim 3, **characterised in that** the control circuits (7-1, 7-2) can be switched between two different reaction speeds for the control of the full light source (4-1, 4-2).

5. The output stage according to Claim 4, **characterised in that** the speed with which one of the control circuits (7-1, 7-2) reacts to an alteration of the power level registered by the photodetector (9-1, 9-2) can be set to zero, and **in that** the means (R1, 16-1, 16-2) for reducing the reference value are equipped to reduce the reference value continuously to zero.

6. The output stage according to Claim 3, 4, or 5, **characterised in that** each control circuit (7-1, 7-2) is integrated with the full light source (4-1, 4-2) that is controlled by it in one of the replaceable modules (6-1, 6-2).

7. The output stage according to one of the previous claims, **characterised in that** the module (6-1, 6-2) is a plug-in card.

8. The output stage according to one of the Claims 2 to 6, **characterised in that** its output is formed by a first output of a power level divider (10) with two outputs, of which a second is connected with the photodetector (9; 9-1, 9-2).

9. The output stage according to one of the previous claims, **characterised in that** it includes an optical multiplexer (1), of whose wavelength-selective inputs (2-1, ..., 2-N) a first (2-1) is connected with an output of the first light source (4-1), and a second (2-2) is connected with an output of the second full light source (4-2), and **in that** the first and the second input (2-1, 2-2) are in each case selectively set to adjacent frequencies of the wavelength multiplex.

10. The output stage according to one of the Claims 1 to 8, **characterised in that** it includes an optical multiplexer (1), of whose wavelength-selective inputs (2-1, ..., 2-N) one (2-1) is connected via a beam combiner (15) with an output of the first light source (4-1) and with an output of the second full light source (4-2).

11. The output stage according to Claim 10, **characterised in that** the beam combiner (15) is a 3dB coupler.

12. The output stage according to one of the previous claims, **characterised in that** both mounting locations are fitted with a module (6-1, 6-2).

13. A method for the replacement of full light sources in an output stage for WDM message transmission, in particular according to one of the previous claims, with the steps:
a) Mounting of a module (6-2) containing a new full light source (4-2) on a mounting location of the output stage;
b) Regulation of the power level of a full light source (4-1) to be removed and the new full light source (4-2) with the objective of maintaining the total power level of the carrier waves and full light waves of the output stage constant, and at the same time continuously reducing the power level of the full light source (4-1) to be removed, and continuously increasing the power level of the new full light source (4-2), until the power level of the full light source (4-1) to be removed is zero,
c) Removal of the full light source (4-1) to be removed.

14. The method according to Claim 13, in which a required value for the power level of the full light sources (4-1, 4-2) is derived from a measured total power level of the carrier waves and full light waves of the output stage, and is distributed to the full light sources (4-1, 4-2).

15. The method according to Claim 13, in which a required value for the total power level of the carrier waves and full light waves of the output stage is prescribed, and the power level of each full light source (4-1, 4-2) is independently regulated on the basis of the required value for the total power level and a measured actual total power level, wherein the regulation of the power level of the new full light source (4-2) is directed towards minimising the difference between the measured total power level and the required value, while the regulation of the power level of the full light source (4-1) to be removed is directed towards minimising the difference between the measured total power level and a fraction (REF') of the required value.

16. The method according to Claim 15, **characterised in that** the regulation of the power level for the full light source (4-1) to be removed takes place with a lower reaction speed than that for the new full light source (4-2).

17. The method according to Claim 15, **characterised in that** the reaction speed with which the regulation of the power level of the full light source (4-1) to be removed reacts to an alteration of the total power level is set to zero.

## Revendications

1. Etage de sortie pour la transmission de messages par multiplexage en longueurs d'ondes, comportant une pluralité de connecteurs de canal de transmission (2-2,2-3,...,2-N) pour délivrer respectivement une onde porteuse modulée avec un signal de transmission à une sortie de l'étage de sortie, une source de lumière pleine (4-1 ;4-2) pour délivrer une onde de lumière pleine à la même sortie avec une puissance correspondant à un signal de puissance de sortie introduit dans une entrée de commande de la source de lumière pleine (4-1 ;4-2), au moins un photodétecteur (9 ;9-1 ;9-2) pour détecter la puissance totale de toutes les ondes porteuses et de lumière pleine à la sortie de l'étage de sortie, un premier circuit de commande (7 ;7-1 ;7-2) pour générer un premier signal de puissance de consigne, en ce sens que la puissance totale détectée par le photodétecteur (9 ;9-1 ;9-2) est maintenue constante à une valeur de référence prescrite (REF), dans lequel la source de lumière pleine (4-1 ;4-2) fait partie d'un module (6-1 ;6-2) monté de manière remplaçable dans l'étage de sortie à un premier emplacement de montage, **caractérisé en ce que** l'étage de sortie présente un deuxième emplacement de montage, auquel un deuxième module (6-2 ;6-1) contenant une source de lumière pleine (4-2 ;4-1) peut être monté et **en ce que** l'étage de sortie comprend un circuit auxiliaire (8-1,8-2 ;7-2 ;7-1) pour alimenter une des deux sources de lumière pleine (4-1,4-2) avec un deuxième signal de puissance de consigne diminuant en continu.

2. Etage de sortie selon la revendication 1, **caractérisé en ce que** le circuit auxiliaire (8-1,8-2) reçoit le signal de puissance de consigne provenant du premier circuit de commande (7) et le divise en un deuxième et un troisième signal de puissance de consigne, moyennant quoi le deuxième et le troisième signal de puissance de consigne sont respectivement représentatifs de puissances de consigne des deux sources de lumière pleine (4-1,4-2), dont la somme correspond à la puissance représentée par le premier signal de puissance de consigne.

3. Etage de sortie selon la revendication 1, **caractérisé en ce que** le circuit auxiliaire est un deuxième circuit de commande (7-2 ;7-1), **en ce que** une des sources de lumière pleine (4-1 ;4-2) est coordonnée à chaque circuit de commande (7-1 ;7-2), laquelle reçoit le signal de valeur de consigne généré par le circuit de commande (7-1 ;7-2) et **en ce que** les circuits de commande (7-1,7-2) présentent respectivement des moyens (8-1,8-2 ;R1,R2,R3,12 ;R1,16-1,16-2) pour réduire la valeur de référence (REF) qui leur est individuellement prescrite.

4. Etage de sortie selon la revendication 3, **caractérisé en ce que** les circuits de commande (7-1,7-2) peuvent être commutés entre deux vitesses de réaction différentes pour commander la puissance des sources de lumière pleine (4-1,4-2).

5. Etage de sortie selon la revendication 4, **caractérisé en ce que** la vitesse, à laquelle un des circuits de commande (7-1 ;7-2) réagit à la variation de la puissance détectée par le photodétecteur (9-1,9-2), peut être ramenée à zéro et **en ce que** les moyens (R1,16-1,16-2) pour réduire la valeur de référence sont conçus afin de réduire à zéro la valeur de référence en continu.

6. Etage de sortie selon la revendication 3,4 ou 5, **caractérisé en ce que** chaque circuit de commande (7-1,7-2) est assemblé avec la source de lumière pleine (4-1,4-2) commandée par lui en un des modules (6-1,6-2) remplaçables.

7. Etage de sortie selon une des revendications précédentes, **caractérisé en ce que** le module (6-1,6-2) est une carte enfichable.

8. Etage de sortie selon une des revendications 2 à 6, **caractérisé en ce que** sa sortie est formée par une première sortie d'un diviseur de puissance (10) comportant deux sorties, dont une deuxième est reliée au photodétecteur (9 ; 9-1,9-2).

9. Etage de sortie selon une des revendications précédentes, **caractérisé en ce que** il comprend un multiplexeur optique (1), des entrées sélectives de longueurs d'ondes (2-1,...,2-N) duquel une première (2-1) est reliée à une sortie de la première source de lumière pleine (4-1) et une deuxième (2-2) est reliée à une sortie de la deuxième source de lumière pleine (4-2), et **en ce que** la première et la deuxième entrée (2-1,2-2) sont respectivement sélectives pour des fréquences adjacentes du multiplexage de longueurs d'ondes.

10. Etage de sortie selon une des revendications 1 à 8, **caractérisé en ce que** il comprend un multiplexeur optique (1), des entrées sélectives de longueurs d'ondes (2-1,...,2-N) duquel une première (2-1) est reliée via un combineur de faisceaux (15) à une sortie de la première source de lumière pleine (4-1) et à une sortie de la deuxième source de lumière pleine (4-2).

11. Etage de sortie selon la revendication 10, **caractérisé en ce que** le combineur de faisceau (15) est un coupleur à 3 dB.

12. Etage de sortie selon une des revendications précédentes, **caractérisé en ce que** les deux emplacements de montage sont équipés d'un module (6-1-6-2).

13. Procédé pour échanger des sources de lumière pleine dans un étage de sortie pour la transmission de messages par multiplexage en longueurs d'ondes, notamment selon une des revendications précédentes, comprenant les étapes consistant à :
a) monter un module (6-2) contenant une nouvelle source de lumière de sortie (4-2) à un emplacement de montage de l'étage de sortie ;
b) régler la puissance d'une source de lumière pleine (4-1) à supprimer et de la nouvelle source de lumière pleine (4-2) dans le but de maintenir constante la puissance totale des ondes porteuses et de lumière pleine de l'étage de sortie et de réduire simultanément en continu la puissance de la source de lumière pleine (4-1) à supprimer et d'augmenter en continu la puissance de la nouvelle source de lumière pleine (4-2), jusqu'à ce que la puissance de la source de lumière pleine (4-1) à supprimer soit zéro,
c) supprimer la source de lumière pleine (4-2) à supprimer.

14. Procédé selon la revendication 13, dans lequel une valeur de consigne pour la puissance des sources de lumière pleine (4-1,4-2) est déduite d'une puissance totale calculée des ondes porteuses et de lumière pleine de l'étage de sortie et répartie sur les sources de lumière pleine (4-1,4-2).

15. Procédé selon la revendication 13, dans lequel une valeur de consigne de la puissance totale des ondes porteuses et de lumière pleine de l'étage de sortie est prescrite, et la puissance de chaque source de lumière pleine (4-1,4-2) est réglée indépendamment sur la base de la valeur de consigne de la puissance totale et d'une puissance totale effective mesurée, moyennant quoi le réglage de puissance de la nouvelle source de lumière pleine (4-2) a pour but de minimiser la différence entre la puissance totale mesurée et la valeur de consigne, alors que le réglage de puissance de la source de lumière pleine à supprimer (4-1) a pour but de minimiser la différence entre la puissance totale mesurée et une fraction (REF') de la valeur de consigne.

16. Procédé selon la revendication 15, **caractérisé en ce que** le réglage de puissance de la source de lumière pleine (4-1) à supprimer s'effectue à une vitesse de réaction plus petite que pour la nouvelle source de lumière pleine (4-2).

17. Procédé selon la revendication 15, **caractérisé en ce que** la vitesse de réaction, à laquelle le réglage de puissance de la source de lumière pleine (4-1) à supprimer réagit à une variation de la puissance totale, est ramenée à zéro.
